# EUROPEAN PATENT APPLICATION

(11) **EP 2 620 811 A1**
(43) Date of publication of application: **31.07.2013**
(21) Application number: 11837508.8
(22) Date of filing: 09.09.2011
(51) Int. Cl.: G02F 1/137, G02F 1/1335, G02F 1/1334

(54) **SMECTIC LIQUID CRYSTAL COLOR DISPLAY**

(30) Priority: 02.11.2010 CN 201010534282
(71) Applicant: Halation Photonics Corporation, Jiangsu 215123 (CN)
(72) Inventor: SUN, Gang, Jiangsu 215123 (CN); TIAN, Li, Jiangsu 215123 (CN); WAN, Lifang, Jiangsu 215123 (CN)
(74) Representative: Bokinge, Ole
(86) International application number: PCT/CN2011/079541
(87) International publication number: WO 2012/058982

(57) **Abstract**

A smectic liquid crystal color display is presented, which includes a first substrate layer and a second substrate layer. A mixed layer, formed by mixing smectic liquid crystal and an additive, is disposed between the first substrate layer and the second substrate layer. A first conductive electrode layer is disposed at one side of the first substrate layer facing the mixed layer. A second conductive electrode layer is disposed at one side of the second substrate layer facing the mixed layer. A color film layer is disposed at one side of the first conductive electrode layer or at one side of the second conductive electrode layer. The provided display may display images in full color at double sides simultaneously, and is advantageous in having a broad visual range, high contrast, good display effect, light and thin properties, and being environmental friendly with no radiation.

## Description

### RELATED APPLICATION

This application claims priority to Chinese Patent Application No. 201010534282.5, entitled "Smectic Liquid Crystal Color Display," which was filed at Chinese Patent Office on November 9, 2010, the disclosures of which are hereby incorporated herein by reference in their entireties for all purposes.

### TECHNICAL FIELD

The present invention relates to a display device, and more particularly to a smectic liquid crystal display (LCD) capable of displaying images in full color at double sides.

### BACKGROUND ART

The LCD is one of the flat-panel display components that are most widely used and have the greatest potential for development in the future.

The conventional LCDs all have a backlight structure, which includes multiple sequentially laminated optical film layers such as a polarizer, a prism sheet, and a color filter. The polarizer and the color filter are critical parts indispensable for implementing color display of the images. In practical application, the light may have about 50% optical energy loss when passing through the polarizer, and have over 40% optical energy loss when passing through the RGB color filter, so that the optical flux rate of the display becomes rather small. Therefore, in order to obtain a displayed image of appropriate luminance and contrast, the currently taken measure is to compensate with a backlight having the luminance two or three times greater than that of the display screen. However, in this case, the power consumption of the display is largely increased.

Currently, the existing smectic LCD devices capable of displaying images in color adopt a liquid crystal layered dyeing scheme. Such a smectic LCD device generally has a bi-layered or tri-layered structure. Taking the tri-layered structure for example, each layered structure is mainly formed by an upper substrate layer, a lower substrate layer and a mixed layer disposed between the upper substrate layer and the lower substrate layer. Since dichroic dyes of different colors are added into the mixed layer of each layered structure (for example, dichroic dyes of three different colors, that is, cyan, magenta and yellow are respectively added into the three layers), each layered structure presents a different color, and the structures of the three layers are laminated and disposed on a white reflecting plate to form a display device with the tri-layered structure. Through the color mixing of the dichroic dyes in the tri-layered structure, the display device of the tri-layered structure may display images in multiple colors, including black and white. However, the smectic LCD device adopting the liquid crystal layered dyeing scheme also has the following disadvantages. In practical application, light is reflected back after passing through six substrate layers, and the reflectivity thereof may not exceed 30%, so that the reflectivity of the display device is low and fails to meet the display requirement. Moreover, even if the smectic liquid crystal in each layered structure is completely transparent, molecules of the dichroic dyes still have certain light absorption property and present certain colors. In this case, the transmission rate of the light is further lowered, generally far lower than 30%, and the display effect is hardly desirable. Moreover, since the entire image on the display device is substantially displayed in a tri-layered plane, light is reflected in different planes to cause parallax, which affects the display effect, and for each display, the liquid crystal molecules in the tri-layered structure need to be driven, so that the peripheral driving circuit of the display device is rather complicated, and the portability of the whole display device is deteriorated.

Further, limited by the backlight mounted on the conventional LCD and the reflecting plate mounted on the existing smectic LCD device capable of displaying images in color, these LCDs can only display images at one side. However, with further development of the liquid crystal display technology, the requirements on the LCDs are increasingly diversified, and the liquid crystal screen for double-sided display is required in various fields such as application in roadside billboards.

In view of the above, how to design a color smectic LCD having high optical energy utilization rate, simple and portable structure and capable of displaying at double sides is currently an issue to be urgently solved.

### SUMMARY OF THE INVENTION

The present invention is directed to provide a smectic liquid crystal color display capable of displaying color images at double sides.

To achieve the above objective, the present invention achieves the following technical solution.

A smectic liquid crystal color display includes a first substrate layer and a second substrate layer. A mixed layer, formed by mixing smectic liquid crystal and an additive, is disposed between the first substrate layer and the second substrate layer. A first conductive electrode layer is disposed at one side of the first substrate layer facing the mixed layer. A second conductive electrode layer is disposed at one side of the second substrate layer facing the mixed layer. A color film layer is disposed at one side of the first conductive electrode layer or at one side of the second conductive electrode layer.

The present invention has the following advantages. 1. The display of the present invention can display an image at the front and rear sides simultaneously, and the display effect at each side is desirable. 2. Compared with the conventional LCD and the existing smectic LCD device capable of displaying images in color, the display of the present invention does not use any polarizer, nor use any multi-layered structure, so that the display of the present invention greatly reduces the optical energy loss caused by the polarizer or the multi-layered structure, thereby greatly increasing the utilization rate of the optical energy, enhancing the luminance of the display, and improving the display effect. 3. The display of the present invention achieves the full-color display effect by merely using a single color film layer, and meanwhile the display of the present invention eliminates the parallax defect caused by the multi-layered structure of the existing smectic LCD device capable of displaying images in color, so that the image is clearly displayed and has high contrast, the whole display is rather light and thin, the peripheral driving circuit is simple and not complicated, and the manufacturing complexity and cost of the display are largely reduced. 4. The display of the present invention images through scattered light, and compared with transmissive or reflective imaging, the scattered light exists in all the directions, thereby increasing the visual angle of the display of the present invention, and the display of the present invention achieves good display effect in all the directions. 5. The AR film and/or the AG film is designed to enable the protection layer in the present invention to prevent mirror reflection on the surface of the display, so that the surface of the display may not cause reflection or glare, and protects the eyesight of the viewer.

### BRIEF DESCRIPTION OF THE DRAWINGS

The aforementioned and other objectives, features and advantages of the present invention will become more comprehensible with reference to the accompanying drawings. Like symbols in the drawings indicate the same parts. The accompanying drawings are not proportionally resized according to the actual size intentionally, as long as the principle of the present invention is highlighted.
FIG. 1 is a schematic structural diagram of a first embodiment of a smectic liquid crystal color display according to the present invention;
FIG. 2 is a schematic structural diagram of a second embodiment of a smectic liquid crystal color display according to the present invention;
FIG. 3 is a schematic diagram of first and second conductive electrode layers arranged in a horizontal and vertical point array;
FIG. 4 is a schematic structural diagram of an RGBW color film layer;
FIG. 5 is a schematic structural diagram of an RGB color film layer;
FIG. 6 is a diagram illustrating a display principle of an R color block displayed in red (light is incident on a first substrate layer); and
FIG. 7 is a diagram illustrating a display principle of an R color block displayed in red (light is incident on a second substrate layer).

### DETAILED DESCRIPTION

In order to make the objectives, features, and advantages of the present invention comprehensible, embodiments of the present invention are described in detail below with the accompanying drawings.

Different embodiments or examples are provided in the following disclosure to implement different structures of the present invention. To simplify the disclosure of the present invention, the members and settings of specific examples are described below. Certainly, the following description is only exemplary and not intended to limit the present invention. Moreover, the present invention may repeatedly use the reference numbers and/or letters in different examples for the purpose of simplification and clarification, and does not indicate any relation between the described embodiments and/or settings. In addition, the present invention provides examples of specific processes and materials, but it is apparent to those of ordinary skill in the art that other processes and/or other materials are also applicable.

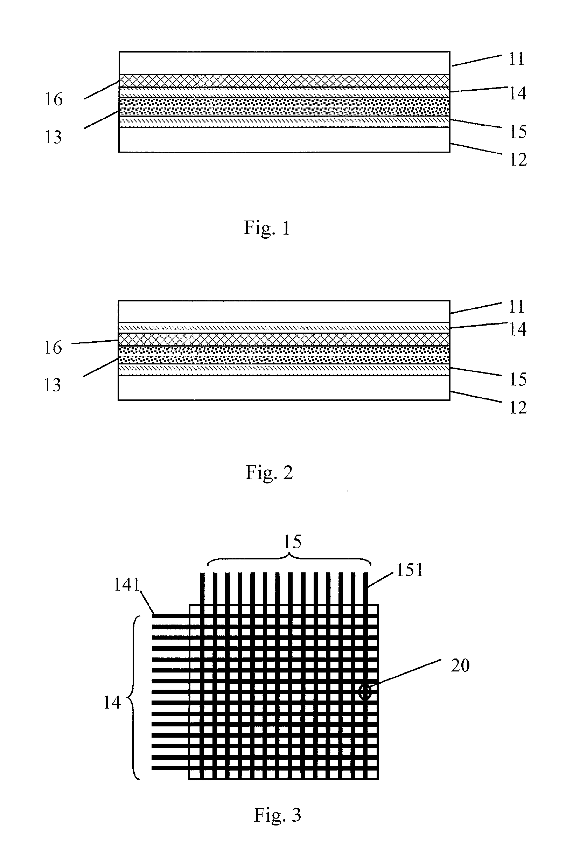

Referring to FIG. 1 to FIG. 2, the smectic liquid crystal color display of the present invention includes a first substrate layer 11 and a second substrate layer 12. The first substrate layer 11 and the second substrate layer 12 may be made of glass or plastic. The plastic layer may be a transparent plastic thin film or a transparent rigid plastic plate. A mixed layer 13, formed by mixing smectic liquid crystal and an additive, is disposed between the first substrate layer 11 and the second substrate layer 12. A first conductive electrode layer 14 is disposed at one side of the first substrate layer 11 facing the mixed layer 13, and a second conductive electrode layer 15 is disposed at one side of the second substrate layer 12 facing the mixed layer 13. The first conductive electrode layer 14 and the second conductive electrode layer 15 are connected to an external driving control device (not shown). The first conductive electrode layer 14 and the second conductive electrode layer 15 are transparent, which may be made of indium tin oxide (ITO), and may use auxiliary metal electrodes, such as aluminum, copper, and silver according to requirements. A color film layer 16 is disposed at one side of the first conductive electrode layer 14 or at one side of the second conductive electrode layer 15.

FIG. 1 shows that the color film layer 16 is disposed on a surface of the first conductive electrode layer 14 facing the first substrate layer 11, and FIG. 2 shows that the color film layer 16 is disposed on a surface of the first conductive electrode layer 14 facing the mixed layer 13. The circumstance that the color film layer 16 is disposed at one side of the second conductive electrode layer 15 is not shown, which can be figured out with reference to the circumstance that the color film layer 16 is disposed at one side of the first conductive electrode layer 14 in FIG. 1 and FIG. 2, and the details will not be repeated herein. No matter whether the color film layer 16 is disposed at one side of the first conductive electrode layer 14 or at one side of the second conductive electrode layer 15, the beneficial effects of the present invention can be achieved.

In the mixed layer 13, the smectic liquid crystal is one or any combination of a compound with siloxy and tetracyano-tetraoctyl-biphenyl or tetra(decyl acetate)-tetracyano-biphenyl, and the additive is a conductive compound, for example, a compound containing conductive ions such as cetyltriethylammonium bromide. The thickness of the mixed layer 13 is measured by micrometer. The smectic liquid crystal (considered as smectic liquid crystal molecules in the microscopic view, which will be illustrated in the following) accounts for 90 wt% to 99.999 wt% of the mixture, and the additive accounts for 0.001 wt% to 10 wt% of the mixture. If the weight percentage of the additive in the mixture is smaller than 0.001 wt%, since the quantity of the additive is too small, the reciprocating motion of the ions in the additive caused by changes of the potential difference between the row electrodes and the column electrodes cannot change the arrangement mode of the smectic liquid crystal molecules, that is, the color display of the sub-pixel points is beyond control. If the weight percentage of the additive in the mixture is greater than 10 wt%, a short circuit may be resulted between the first conductive electrode layer and the second conductive electrode layer due to the large quantity of the additive, and the molecules cannot be driven; and meanwhile, the large quantity of the additive may lower the resistivity of the mixed layer, and shorten its service life. In an example, the smectic liquid crystal accounts for 90 wt% of the mixture, and the additive accounts for 10 wt% of the mixture. In another example, the smectic liquid crystal accounts for 99.999 wt% of the mixture, and the additive accounts for 0.001 wt% of the mixture. In still another example, the smectic liquid crystal accounts for 95 wt% of the mixture, and the additive accounts for 5 wt% of the mixture. In still another example, the smectic liquid crystal accounts for 98 wt% of the mixture, and the additive accounts for 2 wt% of the mixture. In still another example, the smectic liquid crystal accounts for 91 wt% of the mixture, and the additive accounts for 9 wt% of the mixture. In still another example, the smectic liquid crystal accounts for 99 wt% of the mixture, and the additive accounts for 1 wt% of the mixture. In still another example, the smectic liquid crystal accounts for 92 wt% of the mixture, and the additive accounts for 8 wt% of the mixture.

In practical application, the mixture formed by mixing the smectic liquid crystal and the additive is prepared by infusion. Taking the display in FIG. 1 for example, the color film layer 16 is adhered to the first substrate layer 11, the first conductive electrode layer 14 and the second conductive electrode layer 15 are respectively plated on the color film layer 16 and the second substrate layer 12, and finally the mixed layer 13 is infused in a gap between the structure formed by the first substrate layer 11, the color film layer 16, and the first conductive electrode layer 14 and the structure formed by the second substrate layer 12 and the second conductive electrode layer 15 (that is, between the first conductive electrode layer 14 and the second conductive electrode layer 15). The above infusion process is similar to a conventional super twisted nematic (STN) infusion process, and the difference lies in that, the infusion process of the present invention does not have the steps of coating a polyimide (PI) alignment layer, surface-mounting a polarizing film and surface-mounting a color filter in the conventional STN infusion process. Moreover, due to the viscosity of the smectic liquid crystal material, before being infused, the smectic liquid crystal doped with the additive needs to be heated to a certain temperature, generally above 60°C, till the smectic liquid crystal doped with the additive becomes a flowing liquid, and in this case, the conventional STN infusion process can be used for vacuum infusion.

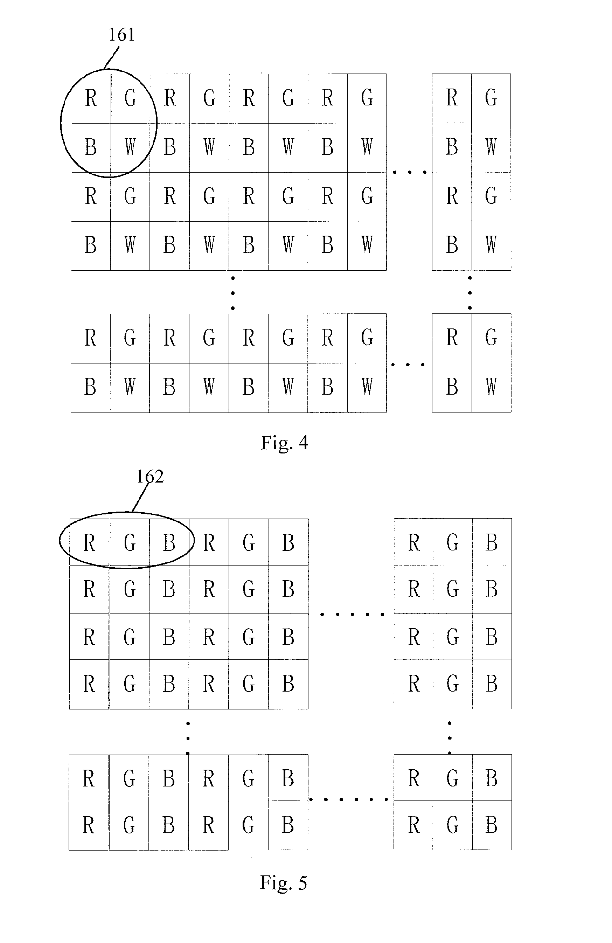

The color film layer in the display of the present invention may be an RGBW color film layer. Referring to FIG. 4, the RGBW color film layer is formed by M×N color developing units 161 (one color developing unit 161 is circled in FIG. 4, and the color developing units are arranged in an M×N matrix structure), and each color developing unit 161 is formed by four color blocks, that is, an R color block, a G color block, a B color block, and a W color block arranged in a 2×2 matrix structure. If the color film layer adopts an RGBW color film layer, the first conductive electrode layer 14 and the second conductive electrode layer 15 need to be set as follows: the first conductive electrode layer 14 is formed by 2M strip row electrodes 141 arranged in parallel (adjacent row electrodes are disposed at an interval), the second conductive electrode layer 15 is formed by 2N strip column electrodes 151 arranged in parallel (adjacent column electrodes are disposed at an interval), and the 2M strip row electrodes 141 of the first conductive electrode layer 14 are orthogonal to the 2N strip column electrodes 151 of the second conductive electrode layer 15, so that the first conductive electrode layer 14 and the second conductive electrode layer 15 form a 2M×2N sub-pixel point array. FIG. 3 shows the sub-pixel point array formed by the row and column electrodes, in which the symbol 20 indicates a sub-pixel point. The 2M×2N sub-pixel points 20 formed by the first conductive electrode layer 14 and the second conductive electrode layer 15 are one-to-one corresponding to the 2M×2N color blocks of the RGBW color film layer, that is, one color block of the RGBW color film layer is corresponding to one sub-pixel point 20, and four sub-pixel points 20 corresponding to four color blocks in the color developing unit 161 form a pixel point. As for the display of the present invention that adopts the RGBW color film layer, the pixel point is a basic unit for image display, a displayed image is formed by several pixel points, and each pixel point is formed by four sub-pixel points corresponding to four color blocks respectively. A capacitive structure having a large area is formed between the two conductive electrode layers 14, 15 and the intermediate mixed layer 13, and four independent capacitive structures having a small area are respectively formed at the positions of the four sub-pixel points in each pixel point.

The color film layer in the display of the present invention is an RGB color film layer. Referring to FIG. 5, the RGB color film layer is formed by M×N color developing units 162 (one color developing unit 162 is circled in FIG. 5, and the color developing units are arranged in an M×N matrix structure), and each color developing unit 162 is formed by three color blocks, that is, an R color block, a G color block, and a B color block arranged in a 1×3 matrix structure. If the color film layer adopts an RGB color film layer, the first conductive electrode layer 14 and the second conductive electrode layer 15 need to be set as follows: the first conductive electrode layer 14 is formed by M strip row electrodes 141 arranged in parallel (adjacent row electrodes are disposed at an interval), the second conductive electrode layer 15 is formed by 3N strip column electrodes 151 arranged in parallel (adjacent column electrodes are disposed at an interval), and the M strip row electrodes 141 of the first conductive electrode layer 14 are orthogonal to the 3N strip column electrodes 151 of the second conductive electrode layer 15, so that the first conductive electrode layer 14 and the second conductive electrode layer 15 form an M×3N sub-pixel point array. FIG. 3 shows the sub-pixel point array formed by the row and column electrodes, in which the symbol 20 indicates a sub-pixel point. The M×3N sub-pixel points 20 formed by the first conductive electrode layer 14 and the second conductive electrode layer 15 are one-to-one corresponding to the M×3N color blocks of the RGB color film layer, that is, one color block of the RGB color film layer is corresponding to one sub-pixel point 20, and three sub-pixel points 20 corresponding to three color blocks in the color developing unit 162 form a pixel point. As for the display of the present invention that adopts the RGB color film layer, the pixel point is a basic unit for image display, a displayed image is formed by several pixel points, and each pixel point is formed by three sub-pixel points corresponding to three color blocks respectively. A capacitive structure having a large area is formed between the two conductive electrode layers 14, 15 and the intermediate mixed layer 13, and three independent capacitive structures having a small area are respectively formed at the positions of the three sub-pixel points in each pixel point.

In the present invention, the color film layer is already known, so the material and specific structure thereof will not be described in detail herein.

A protection layer (not shown) may also be disposed at one side of the first substrate layer 11 and at one side of the second substrate layer 12 facing the outside. The protection layer is made of a PET or PC or glass base material, and the protection layer is coated or adhered on the first substrate layer 11 and the second substrate layer 12. An anti-reflection AR film and/or an anti-glare AG film may be disposed on a surface of the protection layer at one side of the first substrate layer 11 and facing the first substrate layer 11, to protect the display and enhance the comfort of reading and viewing. Preferably, the AR film is first coated on the surface of the protection layer facing the first substrate layer 11, and then the AG film is coated. An AR film and/or an AG film may also be disposed on a surface of the protection layer at one side of the second substrate layer 12 and facing the second substrate layer 12, to protect the display and enhance the comfort of reading and viewing. Preferably, the AR film is first coated on the surface of the protection layer facing the second substrate layer 12, and then the AG film is coated. Certainly, the AR film and/or the AG film may also be directly coated on the surface of the first substrate layer 11 and the surface of the second substrate layer 12 without forming the protection layer.

The display of the present invention adopting the RGBW color film layer is used as an example for illustrating the image display principle.

According to the demand of image display, the driving control device controls voltage signals applied on each electrode of the first conductive electrode layer 14 and the second conductive electrode layer 15, so that the parts of the mixed layer respectively corresponding to the R, G, B, and W color blocks in each color developing unit 161 present a hazy photophobic state or a completely transparent state or other progressive states, and the R, G, B, and W color blocks in each color developing unit 161 present corresponding colors. Since the color developing unit 161 formed by the R, G, B, and W color blocks has a small area (the area of the color developing unit is the area of the pixel point), and is measured by micrometer, for example, 107±5 µm, for one color developing unit 161, the color obtained by mixing the colors respectively presented by the R, G, B, and W color blocks in the color developing unit 161 is the color eventually presented by the pixel point corresponding to the color developing unit 161 (that is, the color actually viewed by the viewer). That is, the colors of the four sub-pixel points 20 corresponding to each color developing unit 161 are controlled to enable each pixel point to present the desired color, so that the display presents the desired color display state. The color presented by the W color block may be determined by the colors presented by the other three R, G, and B color blocks in the color developing unit 161, and the W color block is adjusted to make the luminance and chroma of the pixel point corresponding to the color developing unit 161 reach a balance point.

A pixel point is used as an example below for illustration.

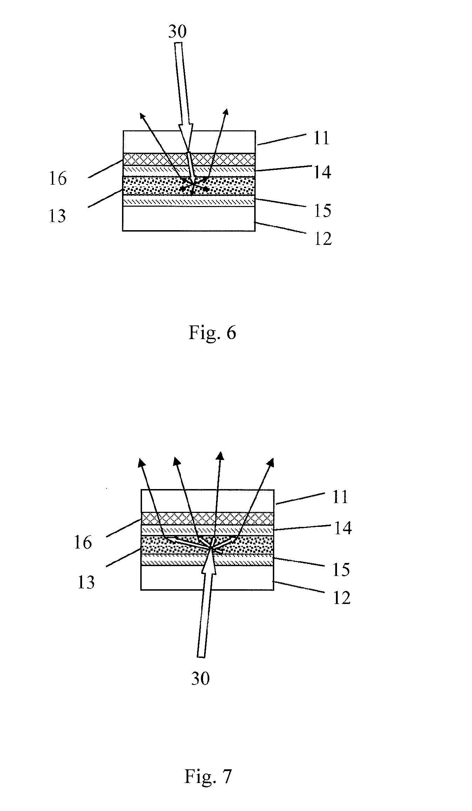

If the pixel point needs to be displayed in red, low-frequency high-voltage electric signals are applied on the row and column electrodes corresponding to the R color block of the pixel point (for example, positive and negative bidirectional pulses of about 100 v and 50 Hz are applied, and the voltage amplitude of the voltage waveform obtained after the low-frequency high-voltage electric signals applied on the row and column electrodes are superimposed is greater than a threshold voltage amplitude, where the threshold voltage is a voltage for driving the smectic liquid crystal molecules to cause changes of the arrangement mode, which is determined by the composition and thickness of the mixed layer, and is generally above 5 V); and high-frequency high-voltage electric signals are applied on the row and column electrodes corresponding to the G and B color blocks of the pixel point (for example, positive and negative bidirectional pulses of about 100 V and 1 kHz are applied, and the voltage amplitude of the voltage waveform obtained after the high-frequency high-voltage electric signals applied on the row and column electrodes are superimposed is greater than the threshold voltage amplitude). The smectic liquid crystal molecules in the part of the mixed layer corresponding to the R color block are twisted and become disordered. The smectic liquid crystal molecules in the part of the mixed layer corresponding to the G and B color blocks are regularly arranged. Light 30 incident from one side of the first substrate layer 11 is emitted to the mixed layer 13 through the first substrate layer 11, the color film layer 16, and the first conductive electrode layer 14. In the part of the mixed layer corresponding to the R color block, referring to FIG. 6, due to the anisotropy of the smectic liquid crystal molecules (that is, since the light incident on the part of the mixed layer passes through different long optical axes of the liquid crystal molecules, the light refraction angle of each liquid crystal molecule is different, and the refractive indexes of the liquid crystal molecules are different), the refraction of light incident on each smectic liquid crystal molecule is quite different, that is, in the thin part of the mixed layer corresponding to the R color block, the light refractive index changes dramatically. The light is intensively scattered in the part of the mixed layer corresponding to the R color block, which is regarded as a light scattering effect in the macroscopic view (the part of the mixed layer corresponding to the R color block presents a hazy photophobic state, like ground glass). A large amount of the scattered light in the part of the mixed layer corresponding to the R color block is emitted to the R color block

(in the part of the mixed layer, a small amount of the scattered light is emitted to the other color blocks, the light emitted through the second substrate layer 12 may not affect the color display of the color film layer 16, and the light emitted back through the second substrate layer 12 is quite weak). The R color block may selectively allow the red light to pass through, so that the R color block presents a red color (in the present invention, the color display mode adopts the principle of imaging with the scattered light). In the part of the mixed layer corresponding to the G color block, the long optical axes of the regularly arranged smectic liquid crystal molecules are perpendicular to the plane of the first and second conductive electrode layers 14, 15, and therefore, the refraction of the light incident on the smectic liquid crystal molecules does not change dramatically, and the light may freely pass through the part of the mixed layer corresponding to the G color block (the part of the mixed layer corresponding to the G color block presents a completely transparent state in the macroscopic view) and is directly emitted from the second substrate layer 12. Since the display displays images under the ambient light, a small amount of light is perpendicularly incident on the first substrate layer 11, and most of the light is obliquely incident, the amount of light eventually transmitted through the G color block is small, so that the G color block does not present any color. Similarly, in the part of the mixed layer corresponding to the B color block, the long optical axes of the regularly arranged smectic liquid crystal molecules are perpendicular to the plane of the first and second conductive electrode layers 14, 15, and therefore, the refraction of the light incident on the smectic liquid crystal molecules does not change dramatically, and the light may freely pass through the part of the mixed layer corresponding to the B color block (the part of the mixed layer corresponding to the B color block presents a completely transparent state in the macroscopic view) and is directly emitted from the second substrate layer 12. Since the display displays images under the ambient light, a small amount of light is perpendicularly incident on the first substrate layer 11, and most of the light is obliquely incident, the amount of light eventually transmitted through the B color block is small, so that the B color block does not present any color. In this case, the R color block presents red is combined with the G and B color blocks that do not present any color to enable the corresponding pixel point to eventually present a red color.

If the part of the mixed layer present corresponding to the R color block is in a progressive state (the smectic liquid crystal molecules are partially twisted), the R color block presents a progressive red color (for example, a semi-transparent red color), so that the whole pixel point presents the progressive red color.

For the W color block, the liquid crystal molecules in the corresponding part of the mixed layer, under the control of the voltage signals applied on the corresponding row and column electrodes, are arranged in disorder (present a hazy photophobic state) or regularly (present a completely transparent state) or in other transition states (present a progressive state). The W color block is incapable of allowing the light to selectively pass through, and all the light passes through the W color block. Therefore, if the part of the mixed layer corresponding to the W color block is in a hazy photophobic state, the W color block presents white, so that the luminance of the pixel point is increased, but the chroma of the red color displayed by the pixel point is affected. If the part of the mixed layer corresponding to the W color block is in a completely transparent state, the W color block does not present any color (the principle thereof is the same as that of the G and B color blocks), so that the chroma of the red color displayed by the pixel point is improved (to the highest level), but the luminance of the pixel point is lowered. In practice, to achieve balance between the image luminance and chroma, the display of the W color block may be co-determined by the R, G, and B color blocks, for example, an average color value of the R, G, and B color blocks is taken as the luminance value of the W color block.

When the light 30 is incident from one side of the second substrate layer 12, the display principle that the R color block presents red (as shown in FIG. 7) is basically the same as the circumstance that the light 30 is emitted from one side of the first substrate layer 11 to the R color block, and the difference lies in that, compared with the light incidence circumstance in FIG. 6, the R color block is a little late to allow the red light to pass through. The principle that the G and B color blocks do not present any color is the same as the circumstance that the light 30 is emitted from one side of the first substrate layer 11.

In addition to red, green and blue, the pixel point may also present other colors, and therefore, the whole screen of the display becomes colorful and meets the requirement of full-color display. The display principle that the pixel point presents green, blue and other colors is the same as the display principle that the pixel point presents red, and the details will not be repeated herein. No matter what color the pixel point presents, the display principle may be concluded as: respectively controlling the voltage signals applied on the row and column electrodes corresponding to the R, G, B, and W color blocks (controlling the number of pulse pairs, the frequency and the voltage amplitude of the voltage signals), so that the smectic liquid crystal molecules in the part of the mixed layer corresponding to the R, G, B, and W color blocks are arranged in a corresponding mode (for example, arranged regularly, in disorder, or partially twisted). The part of the mixed layer corresponding to the R, G, B, and W color blocks respectively generates a corresponding scattering effect (for example, produces a hazy photophobic state, a completely transparent state, and a progressive state such as a semi-transparent state), so that the R, G, B, and W color blocks respectively present the corresponding colors, and the colors presented by the R, G, B, and W color blocks are combined into the color eventually presented by the corresponding pixel point.

The difference between the RGB color film layer and the RGBW color film layer lies in that the RGB color film layer does not have the W color block, and cannot adjust the luminance and chroma of the color displayed by the pixel point. The image display principle of the RGB color film layer is the same as that of the RGBW color film layer, which will not be repeated herein.

It can be seen from the above display principle that, when the display of the present invention is outdoors or in an environment with good illumination, the ambient light is incident on the display from all the angles, so the display may display the same image at front and rear sides simultaneously, and the image displayed at one side is reverse to the image displayed at the other side. That is, the viewer, no matter viewing from which side, may see the image with the same display effect.

When the display of the present invention is indoors or in an environment with poor illumination, the ambient light is too weak to meet the luminance requirement of image display. Therefore, to improve the luminance of the displayed image, an illuminating light source, for example, a white light source, may be disposed on the periphery of the display of the present invention. It should be noted that, since a large amount of transmitted light, instead of the scattered light required by the image display, exists in the emitting direction of the light source, and the transmitted light enables each color block to remain the color display, the viewing direction should try not to be parallel with the irradiation direction of the light source, and the irradiation direction of the light source should not be interfered with the line of sight of the viewer, to achieve good viewing effect.

As for the light modulating principle in the mixed layer (that is, how the smectic liquid crystal molecules are driven and arranged correspondingly), reference can be made to related description in Chinese Invention Patent No. 200710304409.2 entitled "Driving Circuit for Smectic Liquid Crystal Display Screen", Chinese Invention Patent Application No. 200710175959.9 entitled "Electrical Control Light Modulating Medium" and Chinese Invention Patent Application No. 200810102000.7 entitled "Electrical Control Light Modulating Medium".

In the present invention, when the voltage signals are applied on the first and second conductive electrode layers, after optical effects such as scattering and complete transparency are generated, the voltage can be removed. Such optical effects do not need to be maintained with voltage. That is, after the voltage is removed, the present invention may still maintain the optical effects when the voltage is applied, and the voltage signal is merely applied for changing the arrangement mode of the smectic liquid crystal molecules. In the present invention, the state that the optical effects can be maintained without electrical driving is called a "multi-stable state" or "quasi-state". In the "multi-stable state", the additive is a conductive compound, and when the voltage signals are applied to the first and second conductive electrode layers, the ions in the conductive compound are in reciprocating motion according to the changes of the potential difference. The reciprocating motion may change the arrangement mode of the smectic liquid crystal molecules, and the arrangement mode of the smectic liquid crystal molecules after change is stable and does not need to be maintained through continuous motion of the ions.

The present invention has the following advantages. 1. The display of the present invention can display an image at the front and rear sides simultaneously, and the display effect at each side is desirable. 2. Compared with the conventional LCD and the existing smectic LCD device capable of displaying images in color, the display of the present invention does not use any polarizer, nor use any multi-layered structure, so that the display of the present invention greatly reduces the optical energy loss caused by the polarizer or the multi-layered structure, thereby greatly increasing the utilization rate of the optical energy, enhancing the luminance of the display, and improving the display effect. 3. The display of the present invention achieves the full-color display effect by merely using a single color film layer, and meanwhile the display of the present invention eliminates the parallax defect caused by the multi-layered structure of the existing smectic LCD device capable of displaying images in color, so that the image is clearly displayed and has high contrast, the whole display is rather light and thin, the peripheral driving circuit is simple and not complicated, and the manufacturing complexity and cost of the display are largely reduced. 4. The display of the present invention images through scattered light, and compared with transmissive or reflective imaging, the scattered light exists in all the directions, thereby increasing the visual angle of the display of the present invention, and the display of the present invention achieves good display effect in all the directions. 5. The AR film and/or the AG film is designed to enable the protection layer in the present invention to prevent mirror reflection on the surface of the display, so that the surface of the display may not cause reflection or glare, and protects the eyesight of the viewer. 6. Since the display of the present invention is designed with the mixed layer formed by the smectic liquid crystal and the additive, the display also has advantages due to the presence of the mixed layer, for example, the multi-stable property, low power consumption, and environmental friendliness, which will not be described in detail herein, and reference can be made to related description in Chinese Invention Patent Application No. 200710175959.9 entitled "Electrical Control Light Modulating Medium" and Chinese Invention Patent Application No. 200810102000.7 entitled "Electrical Control Light Modulating Medium".

The preferred embodiments of the present invention and the technical principles thereof are illustrated above. It is apparent to those skilled in the art that any equivalent modification, simple replacement and other obvious changes can be made based on the technical solution of the present invention without departing from the spirit and scope of the present invention, and these changes shall fall within the protection scope of the present invention.

## Claims

1. A smectic liquid crystal color display, comprising a first substrate layer and a second substrate layer, wherein a mixed layer, formed by mixing smectic liquid crystal and an additive, is disposed between the first substrate layer and the second substrate layer; a first conductive electrode layer is disposed at one side of the first substrate layer facing the mixed layer; a second conductive electrode layer is disposed at one side of the second substrate layer facing the mixed layer; and a color film layer is disposed at one side of the first conductive electrode layer or at one side of the second conductive electrode layer.

2. The smectic liquid crystal color display according to claim 1, wherein the color film layer is an RGBW color film layer.

3. The smectic liquid crystal color display according to claim 2, wherein
the first conductive electrode layer is formed by 2M strip row electrodes arranged in parallel, the second conductive electrode layer is formed by 2N strip column electrodes arranged in parallel, and the 2M strip row electrodes of the first conductive electrode layer are orthogonal to the 2N strip column electrodes of the second conductive electrode layer, so that the first conductive electrode layer and the second conductive electrode layer form a 2M×2N sub-pixel point array;
the RGBW color film layer is formed by M×N color developing units, and each color developing unit is formed by four color blocks, that is, an R color block, a G color block, a B color block, and a W color block, arranged in a 2×2 matrix structure;
the 2Mx2N sub-pixel points formed by the first conductive electrode layer and the second conductive electrode layer are one-to-one corresponding to 2M×2N color blocks; and
four sub-pixel points corresponding to four color blocks in one color developing unit form a pixel point.

4. The smectic liquid crystal color display according to claim 1, wherein the color film layer is an RGB color film layer.

5. The smectic liquid crystal color display according to claim 4, wherein
the first conductive electrode layer is formed by M strip row electrodes arranged in parallel, the second conductive electrode layer is formed by 3N strip column electrodes arranged in parallel, and the M strip row electrodes of the first conductive electrode layer are orthogonal to the 3N strip column electrodes of the second conductive electrode layer, so that the first conductive electrode layer and the second conductive electrode layer form an Mx3N sub-pixel point array;
the RGB color film layer is formed by M×N color developing units, and each color developing unit is formed by three color blocks, that is, an R color block, a G color block, and a B color block, arranged in a 1×3 matrix structure;
the M×3N sub-pixel points formed by the first conductive electrode layer and the second conductive electrode layer are one-to-one corresponding to M×3N color blocks; and
three sub-pixel points corresponding to three color blocks in one color developing unit form a pixel point.

6. The smectic liquid crystal color display according to claim 1, 2 or 4, wherein
a protection layer is respectively disposed at one side of the first substrate layer and at one side of the second substrate layer facing the outside;
an AR film and/or an AG film is disposed on a surface of the protection layer at one side of the first substrate layer and facing the first substrate layer; and
an AR film and/or an AG film are disposed on a surface of the protection layer at one side of the second substrate layer and facing the second substrate layer.

7. The smectic liquid crystal color display according to claim 1, 2 or 4, wherein an illuminating light source is disposed on the periphery of the smectic liquid crystal color display.

8. The smectic liquid crystal color display according to claim 6, wherein an illuminating light source is disposed on the periphery of the smectic liquid crystal color display.

9. The smectic liquid crystal color display according to claim 1, wherein the additive is a conductive compound.

10. The smectic liquid crystal color display according to claim 1 or 9, wherein the smectic liquid crystal accounts for 90 wt% to 99.999 wt% of the mixture, and the additive accounts for 0.001 wt% to 10 wt% of the mixture.

11. The smectic liquid crystal color display according to claim 10, wherein the smectic liquid crystal is one or any combination of a compound with siloxy and tetracyano-tetraoctyl-biphenyl or tetra(decyl acetate)-tetracyano-biphenyl, and the additive is cetyltriethylammonium bromide.
